# EUROPEAN PATENT APPLICATION

(11) **EP 4 184 910 A1**
(43) Date of publication of application: **24.05.2023**
(21) Application number: 21847317.1
(22) Date of filing: 12.07.2021
(51) Int. Cl.: H04N 5/232, G06T 1/00

(54) **INFORMATION PROCESSING DEVICE, INFORMATION PROCESSING METHOD, AND PROGRAM**

(30) Priority: 20.07.2020 JP 2020123577
(71) Applicant: Sony Group Corporation, Minato-Ku, Tokyo, 108-0075 (JP)
(72) Inventor: TONAMI, Tatsuyoshi, Tokyo 108-0075 (JP)
(74) Representative: D Young & Co LLP
(86) International application number: PCT/JP2021/026163
(87) International publication number: WO 2022/019171

(57) **Abstract**

An information processing device is configured to perform a subject of interest setting process of setting a subject of interest for an image group including a plurality of images, and a focusing process of extracting an image including the subject of interest from the image group and bringing the subject of interest into focus in the extracted image.

## Description

### TECHNICAL FIELD

The present technology relates to an information processing device, an information processing method, and a program, and particularly relates to a technology suitable for providing an image to a user.

### BACKGROUND ART

Various services for providing images to users are known. For example, there is a service in which an image captured by a professional photographer at an event such as an athletic meet is uploaded to a server, so as to allow a user to view a photograph (image) on, for example, a website provided by the server and determine a photograph to purchase.

Furthermore, various image processing techniques have been developed for captured images.

Patent Document 1 discloses a technique for performing retrieval of an image suitable for a refocused image in which a focus position can be changed in a depth direction.

### CITATION LIST

### PATENT DOCUMENT

Patent Document 1: Japanese Patent Application Laid-Open No. 2020-4418

### SUMMARY OF THE INVENTION

### PROBLEMS TO BE SOLVED BY THE INVENTION

In the meantime, a service as described above in which the user selects, on the Web, an image that the user wants to purchase, the image being captured by a professional photographer, has the following problems.

For example, in a case where there are a large number of captured images, it is troublesome for the user to retrieve, from all viewable images, an image including a subject that the user wants to find. Specifically, it is difficult to retrieve, from a large number of photographs of an athletic meet at an elementary school, a photograph in which his/her child appears.

Furthermore, even if a target subject appears, there is a possibility that the image is not suitable for viewing by the user because the target subject (for example, his/her child) is out of focus, or another subject (for example, another person) is more conspicuous in the image.

The present technology therefore proposes a technique for providing an image suitable for each user in a simple manner.

### SOLUTIONS TO PROBLEMS

An information processing device according to the present technology includes a control unit that performs a subject of interest setting process of setting a subject of interest for an image group including a plurality of images, and a focusing process of extracting an image including the subject of interest from the image group and bringing the subject of interest into focus in the image extracted.

For example, the information processing device performs the subject of interest setting process and the focusing process on an image captured by an imaging device. It is therefore possible to prepare an image in which the subject of interest suitable for a certain user has been brought into focus.

Note that the focusing process of the present disclosure includes not only a process of bringing a specific subject into focus, but also a process of bringing the subject into a state where the subject is in focus as complete as possible.

In the information processing device according to the present technology, the control unit may perform a process of making a plurality of images including the image subjected to the focusing process viewable on an external device.

As an external device that issues a viewing request, a terminal device (client terminal) used by a user is conceivable. An image group including an image obtained by performing the focusing process on a subject of interest suitable for the user of the client terminal is made viewable on the client terminal.

In the information processing device according to the present technology, the control unit may perform, as the focusing process on an image, a process of bringing the subject of interest into focus and reducing a depth of field.

As the focusing process, it is possible to perform a process of blurring an edge of the subject of interest by reducing the depth of field while bringing the subject of interest into focus.

In the information processing device according to the present technology, the control unit may set, in the subject of interest setting process, a plurality of subjects as the subjects of interest, and perform, as the focusing process, an image process of bringing each of the plurality of the subjects of interest into focus.

A plurality of subjects of interest can be set, and images in which each of the plurality of subjects of interest has been brought into focus are created.

In the information processing device according to the present technology, the control unit may set, in the subject of interest setting process, a plurality of subjects having distances in a depth direction from an imaging device at the time of image capturing different from each other as the subjects of interest, and perform, as the focusing process, an image process of combining images in which each subject of interest has been brought into focus to create an image in which each of the plurality of subjects of interest has been brought into focus.

In order to bring the plurality of subjects of interest having distances in the depth direction different from each other into focus, images in which each of the plurality of subjects of interest is in focus are created and combined.

In the information processing device according to the present technology, the control unit may perform, as the focusing process, a process of blurring a subject of non-interest.

For example, when the subject of non-interest is present at the same position in the depth direction as the subject of interest, the subject of non-interest is in focus, but is intentionally blurred.

In the information processing device according to the present technology, the control unit may set, in the subject of interest setting process, the subject of interest on the basis of operation information from an external device.

For example, the client terminal used by the user is assumed to be the external device, and the subject of interest is set in accordance with a user's operation from the external device.

In the information processing device according to the present technology, the control unit may cause the external device to present list information regarding a subject of interest, and set the subject of interest on the basis of an operation on the list information.

For example, a list of a face image, a name of a subject person, a name of an object, or the like to be the subject of interest is provided as a user interface so as to cause the user to make a selection.

In the information processing device according to the present technology, the control unit may set, in the subject of interest setting process, the subject of interest on the basis of image information transmitted from an external device.

For example, the user is allowed to upload a face image from the client terminal. The information processing device sets the subject of interest on the basis of an image such as the face image.

In the information processing device according to the present technology, the control unit may set, in the subject of interest setting process, the subject of interest on the basis of user information regarding an access source using an external device.

For example, the subject of interest suitable for the user is set in accordance with identification information regarding the user who has logged in, attribute information regarding the user, relevant information, and the like.

In the information processing device according to the present technology, the control unit may set, in the subject of interest setting process, the subject of interest by performing an inference process using user information regarding an access source using the external device.

For example, in accordance with the attribute information regarding the user who has logged in, the relevant information, and the like, a process of inferring a person or the like related to the user is performed to set the subject of interest.

In the information processing device according to the present technology, the control unit may set, in the subject of interest setting process, a candidate for the subject of interest using user information regarding an access source using an external device, and perform a process of causing the external device to present the candidate.

For example, in accordance with the attribute information regarding the user who has logged in, the relevant information, and the like, a process of inferring a person or the like related to the user is performed to set and present a candidate for the subject of interest.

In the information processing device according to the present technology, the control unit may set, in the subject of interest setting process, the subject of interest on the basis of additional information of an image.

For example, the subject of interest is set on the basis of shooting position information, shooting date and time information, and the like as metadata added to the image.

In the information processing device according to the present technology, the control unit may set, in the subject of interest setting process, a candidate for the subject of interest on the basis of additional information of an image, and perform a process of causing an external device to present the candidate.

For example, the candidate for the subject of interest is set on the basis of shooting position information, shooting date and time information, and the like as metadata added to the image, and the candidate is presented.

In the information processing device according to the present technology, the control unit may perform an additional process regarding an image or a sound on the image subjected to the focusing process.

For example, not only the focusing process but also the image process of, for example, changing the hue or the brightness and the process of, for example, adding a sound, and the like are performed on the image including the subject of interest.

In the information processing device according to the present technology, the additional process may be performed on the basis of additional information of an image.

For example, the content of the additional process is determined on the basis of shooting position information, a shooting date and time, and the like.

In the information processing device according to the present technology, the image of the image group may be an image obtained by capturing images from a plurality of viewpoints.

The multi-viewpoint image corresponds to, for example, a plurality of images having different viewpoints obtained by an imaging device/imaging system that simultaneously captures images of a certain subject from a plurality of viewpoints.

In the information processing device according to the present technology, the image of the image group may be an image to which information regarding a distance to a subject in the depth direction at the time of image capturing is added.

For example, it is an image to which information of a distance measurement sensor for a subject at the time of image capturing is added or an image in which distance information for the subject is set on the basis of machine learning or the like.

An information processing method according to the present technology includes causing an information processing device to perform a subject of interest setting process of setting a subject of interest for an image group including a plurality of images; and
a focusing process of extracting an image including the subject of interest from the image group and bringing the subject of interest into focus in the image extracted. This allows preparation of an appropriate image for each user.

A program according to the present technology is a program for causing an information processing device to perform the above-described subject of interest setting process and focusing process. This facilitates implementation of the information processing device.

### BRIEF DESCRIPTION OF DRAWINGS

Fig. 1 is a diagram for describing a system configuration of an embodiment of the present technology.
Fig. 2 is a block diagram of an imaging device of the embodiment.
Fig. 3 is a block diagram of an information processing device of the embodiment.
Fig. 4 is a flowchart of processing of a server device of the embodiment.
Fig. 5 is a diagram for describing an image group of the embodiment.
Fig. 6 is a flowchart of object recognition performed in advance by the server device of the embodiment.
Fig. 7 is a flowchart of an example of processing of the server device in response to a viewing request of the embodiment.
Fig. 8 is a flowchart of an example of a focusing process of the embodiment.
Fig. 9 is a diagram for describing how to bring a plurality of subjects of interest into focus of the embodiment.
Fig. 10 is a flowchart of another example of the focusing process of the embodiment.
Fig. 11 is a diagram for describing a process of blurring a subject of non-interest of the embodiment.
Fig. 12 is a flowchart of a subject of interest setting process of the embodiment.
Fig. 13 is a diagram for describing a user interface for setting a subject of interest of the embodiment.
Fig. 14 is a flowchart of a subject of interest setting process of the embodiment.
Fig. 15 is a flowchart of a subject of interest setting process of the embodiment.
Fig. 16 is a flowchart of a subject of interest setting process of the embodiment.
Fig. 17 is a flowchart of a subject of interest setting process of the embodiment.
Fig. 18 is a flowchart of a subject of interest setting process of the embodiment.
Fig. 19 is a diagram for describing a user interface for setting a subject of interest of the embodiment.

### MODE FOR CARRYING OUT THE INVENTION

Hereinafter, an embodiment will be described in the following order.
<1. System configuration>
<2. Configuration of imaging device, server device, and client terminal>
<3. Outline of processing and target image>
<4. Server device processing>
<5. Focusing process>
<6. Subject of interest setting>
<7. Summary and modification>

### <1. System configuration>

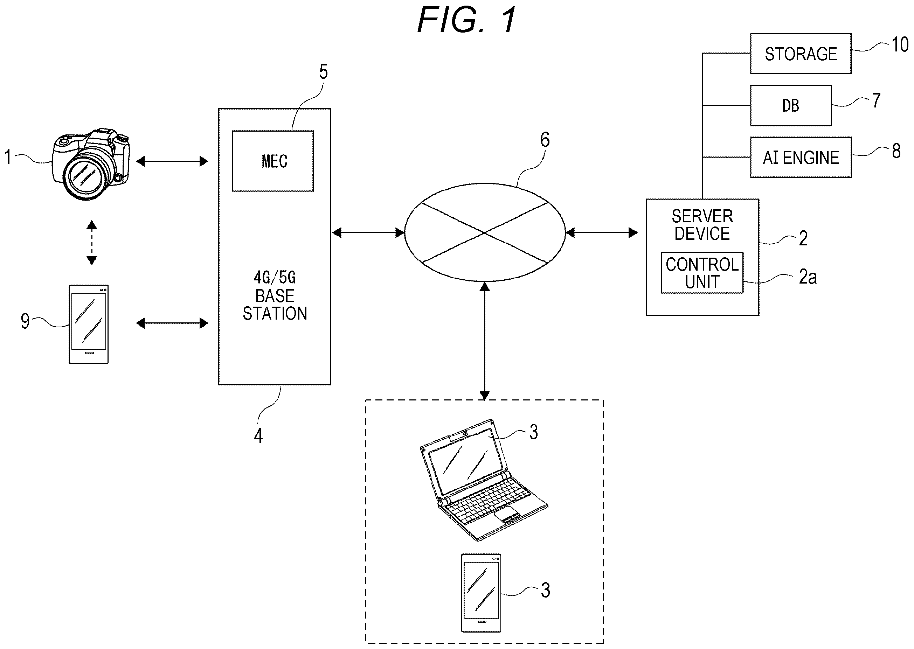

Fig. 1 illustrates an example of a system configuration of an embodiment. This system is enabled by allowing one or a plurality of imaging devices 1, a server device 2, and a client terminal 3 to communicate over a network 6.

Examples of the imaging device 1 include various imaging devices such as a video camera and a still camera. The imaging device 1 thus illustrated may be a camera that is used by a professional photographer to capture an image at an event venue for, for example, a sports event, or may be a camera that is used by a general user to capture an image during a trip or the like. The use case is not limited to any specific use case.

Both the server device 2 and the client terminal 3 are information processing devices each including computer equipment, but the server device 2 is a device responsible for an image providing service, and the client terminal 3 is an information processing device of a user who uses the service provided by the server device 2, so that, in order to distinguish between the server device 2 and the client terminal 3, the server device 2 and the client terminal 3 are referred to as a "server device" and a "client terminal", respectively, in the present disclosure.

Note that, in the present disclosure, the term "image" includes a still image and a moving image.

It is conceivable that the server device 2 is a device that serves as a so-called cloud server. Needless to say, it is not limited to the aspect as a cloud server.

A control unit 2a illustrated in the server device 2 performs a subject of interest setting process and a focusing process as described later.

The server device 2 saves an uploaded image and the like using a storage 10. For example, in a case where a professional photographer uploads an image for viewing by or selling to a user, the server device 2 stores and manages the image in the storage 10.

Furthermore, the server device 2 can store and manage, as an image storage service for general users, an image uploaded by a general user in the storage 10.

Furthermore, the server device 2 can retrieve various types of information from a database 7 (hereinafter, the database is referred to as "DB").

The DB 7 may be a DB constructed on a storage device that can be locally used by the server device 2, or may be a DB constructed on a storage device from which information can be retrieved over various types of networks. That is, the DB 7 may be any DB that can be accessed by the server device 2 (control unit 2a) and from which information can be retrieved.

Furthermore, the server device 2 can obtain results of various types of machine learning-based analysis performed by an artificial intelligence (AI) engine 8.

For example, the AI engine 8 is capable of performing processing such as image detail determination, scene determination, object recognition, face recognition, or personal identification through image analysis as AI processing on an image saved in the storage 10, and the control unit 2a of the server device 2 is capable of performing various types of processing using a result of the image analysis.

The client terminal 3 is, for example, an information processing device such as a personal computer or a mobile terminal such as a smartphone or a tablet used by a general user.

The user can use the service provided by the server device 2 using the client terminal 3. For example, the user can view or purchase a photograph. Furthermore, the user can use a so-called storage service in which an image captured by the user is uploaded to and saved in the server device 2.

It is conceivable that the network 6 is the Internet, a home network, a local area network (LAN), a satellite communications network, or various other networks.

In the example of Fig. 1, the imaging device 1 communicates with the server device 2 via a base station 4. The base station 4 is, for example, a base station of fourth generation mobile communications system (4G communications) and fifth generation mobile communications system (5G communications).

There is a case where mobile edge computing (MEC) 5 is applied to the base station 4. Communications of each imaging device 1 may be performed through processing of the MEC 5, or some functions of the server device 2 may be performed by the MEC 5.

An image can be directly uploaded from the imaging device 1 to the server device 2 using, for example, file transfer protocol (FTP) communications. The use of the FTP communications is an example, and the uploading may be performed using communications based on another communications protocol, such as hypertext transfer protocol (HTTP) communications.

Alternatively, in a case where a professional photographer has a mobile terminal 9 such as a smartphone, it is also possible to transfer an image from the imaging device 1 to the mobile terminal 9 over wired connection or using near field communications and upload the image from the mobile terminal 9 to the server device 2.

Furthermore, an image may be transferred in such a manner that the image is recorded on a portable recording medium such as a memory card in the imaging device 1, and the memory card is provided to the server device 2.

Furthermore, not only the system configuration where the server device 2 as a transmission destination of the imaging device 1 is a cloud server as illustrated in Fig. 1, but also a system configuration where the imaging device 1 and the server device 2 are disposed close to each other and are connected over wired connection or wireless connection is conceivable.

The image uploaded from the imaging device 1 to the server device 2 may be data obtained by conversion into a file format such as joint photographic experts group (JPEG), or may be binary information such as RGB data that is not converted into a file. The data format is not limited to any specific format.

For example, constructing the image transfer system as illustrated in Fig. 1 allows a photographer using the imaging device 1 to upload images captured at an event venue or the like to the server device 2, and a user who has participated in the event to view or purchase an image group of the images using the client terminal 3, for example.

### <2. Configuration of imaging device, server device, and client terminal>

Hereinafter, configuration examples of the imaging device 1, the server device 2, and the client terminal 3 will be described.

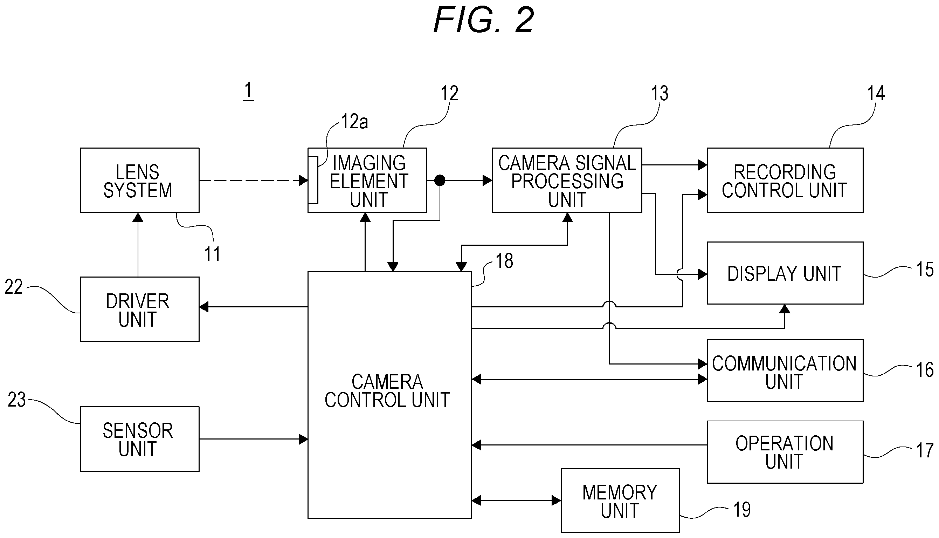

First, a configuration example of the imaging device 1 will be described with reference to Fig. 2.

The imaging device 1 includes, for example, a lens system 11, an imaging element unit 12, a camera signal processing unit 13, a recording control unit 14, a display unit 15, a communication unit 16, an operation unit 17, a camera control unit 18, a memory unit 19, a driver unit 22, and a sensor unit 23.

The lens system 11 includes lenses such as a zoom lens and a focus lens, a diaphragm mechanism, and the like. Light (incident light) from a subject is guided by the lens system 11 and concentrated onto the imaging element unit 12.

The imaging element unit 12 includes, for example, an image sensor 12a (imaging element) of a complementary metal oxide semiconductor (CMOS) type, a charge coupled device (CCD) type, or the like.

The imaging element unit 12 performs, for example, correlated double sampling (CDS) processing, automatic gain control (AGC) processing, and the like on an electrical signal obtained by photoelectrically converting the light received by the image sensor 12a, and further performs analog/digital (A/D) conversion processing on the electrical signal. Then, an imaging signal as digital data is output to the camera signal processing unit 13 and the camera control unit 18 each disposed downstream of the imaging element unit 12.

The camera signal processing unit 13 includes an image processing processor such as a digital signal processor (DSP). The camera signal processing unit 13 performs various types of signal processes on the digital signal (captured image signal) from the imaging element unit 12. For example, as a camera process, the camera signal processing unit 13 performs preprocessing, synchronization processing, YC generation processing, resolution conversion processing, file formation processing, and the like.

In the preprocessing, clamp processing of clamping the black level of R, G, B to a predetermined level, correction processing between R, G, B color channels, and the like are performed on the captured image signal from the imaging element unit 12.

In the synchronization processing, color separation processing is performed so as to cause image data for each pixel to have all of the R, G, B color components. For example, in a case where an imaging element using a Bayer arrangement color filter, demosaicing processing is performed as the color separation processing.

In the YC generation processing, a luminance (Y) signal and a color (C) signal are generated (separated) from the R, G, B image data.

In the resolution conversion processing, resolution conversion processing is performed on the image data subjected to various types of signal processing.

In the file formation processing, for example, the image data subjected to the above-described various types of processing is subjected to, for example, compression encoding for recording or communication, formatting, creation or addition of metadata, and the like to create a file for recording or communication.

For example, an image file in a format such as JPEG, tagged image file format (TIFF), or graphics interchange format (GIF) is created as a still image file. Furthermore, it is also conceivable that an image file in an MP4 format or the like used for recording moving images and sounds conforming to MPEG-4 is created.

Note that it is also conceivable that an image file as raw (RAW) image data is created.

The camera signal processing unit 13 creates metadata including information regarding process parameters in the camera signal processing unit 13, various control parameters acquired from the camera control unit 18, information indicating an operation state of the lens system 11 or the imaging element unit 12, mode setting information, shooting environment information (date and time, location, and the like), identification information regarding the imaging device itself, information regarding a mounted lens, information regarding a preregistered photographer (name and identification information), international press telecommunications council (IPTC) metadata, and the like.

Note that the IPTC metadata is metadata in a format designed by a media association, and can describe various types of information such as "description/caption", "description writer", "headline", and "keyword".

The recording control unit 14 performs recording and reproduction on a recording medium such as a non-volatile memory. For example, the recording control unit 14 performs a process of recording metadata including an image file such as moving image data or still image data, a thumbnail image, or a screen nail image, on the recording medium.

It is conceivable that there are various configurations as the actual configuration of the recording control unit 14. For example, the recording control unit 14 may include a flash memory built in the imaging device 1 and a write/read circuit of the flash memory. Alternatively, the recording control unit 14 may be a card recording/reproducing unit that performs recording/reproduction access to a recording medium detachably attached to the imaging device 1, such as a memory card (portable flash memory or the like). Alternatively, the recording control unit 14 may be implemented as a hard disk drive (HDD) or the like as a configuration where the recording control unit 14 is built in the imaging device 1.

The display unit 15 is a display unit that outputs various displays to a person who captures an image, and is, for example, a display panel or a viewfinder as a display device such as a liquid crystal display (LCD) or an organic electro-luminescence (EL) display disposed in a housing of the imaging device 1.

The display unit 15 outputs various displays on a display screen on the basis of an instruction from the camera control unit 18.

For example, the display unit 15 displays an image reproduced from the image data read from the recording medium by the recording control unit 14.

Furthermore, there is a case where image data of a captured image whose resolution has been converted for display by the camera signal processing unit 13 is supplied to the display unit 15, and the display unit 15 outputs a display on the basis of the image data of the captured image in accordance with an instruction from the camera control unit 18. As a result, a so-called through image (subject monitoring image), which is a captured image during composition confirmation or moving image recording, is displayed.

Furthermore, the display unit 15 displays various operation menus, icons, messages, and the like, that is, a display as a graphical user interface (GUI) on the screen on the basis of an instruction from the camera control unit 18.

The communication unit 16 performs data communications or network communications with an external device in a wired or wireless manner.

For example, captured image data (a still image file or a moving image file) and metadata are transmitted and output to an external information processing device, a display device, a recording device, a reproduction device, or the like.

Furthermore, as a network communication unit, the communication unit 16 can communicate, over the network 6 such as such as the Internet, a home network, or a local area network (LAN), various types of data with a server or a terminal on the network. For example, in the present embodiment, the communication unit 16 performs a communication process of transmitting captured image data (the above-described image file and the like) and metadata to the server device 2.

Furthermore, the imaging device 1 may have a capability of communicating, using the communication unit 16, information with, for example, a smartphone, a tablet terminal, or the like possessed by a photographer or the like, using short-range wireless communications such as Bluetooth (registered trademark), Wi-Fi (registered trademark) communications, or near field communication (NFC), or infrared communications. In this case, an image can be transferred via a smartphone or the like.

Furthermore, the imaging device 1 and another device may be capable of communicating with each other using communications over wired connection.

The operation unit 17 collectively indicates input devices for the user to perform various operation inputs. Specifically, the operation unit 17 indicates various operation elements (a key, a dial, a touchscreen, a touchpad, etc.) provided in the housing of the imaging device 1.

A user's operation is detected by the operation unit 17, and a signal corresponding to the input operation is transmitted to the camera control unit 18.

The camera control unit 18 includes a microcomputer (operation processing device) including a central processing unit (CPU).

The memory unit 19 stores information and the like to be used for processing by the camera control unit 18. The memory unit 19 thus illustrated collectively indicates to, for example, a read only memory (ROM), a random access memory (RAM), a flash memory, and the like.

The memory unit 19 may be a memory area allocated in a microcomputer chip as the camera control unit 18 or may be a separate memory chip.

The camera control unit 18 executes a program stored in the ROM, the flash memory, or the like of the memory unit 19 to control the whole of the imaging device 1.

For example, the camera control unit 18 controls the operation of each necessary unit such as the control of the shutter speed of the imaging element unit 12, the instruction of various signal processes in the camera signal processing unit 13, the imaging operation and the recording operation in accordance with the user's operation, the reproduction operation of the recorded image file, the operation of the lens system 11 such as zooming, focusing, and diaphragm adjustment in a lens barrel, the user interface operation, and the like.

The RAM in the memory unit 19 is used as a work area for temporary storing data, a program, and the like during various data processes of the CPU of the camera control unit 18.

The ROM or the flash memory (non-volatile memory) in the memory unit 19 is used for storing an operating system (OS) for the CPU to control each unit, a content file such as an image file, an application program for various operations, firmware, various types of setting information, and the like.

The various types of setting information include communication setting information, an exposure setting as setting information regarding imaging operation, a shutter speed setting, a mode setting, a white balance setting as setting information regarding image processing, a color setting, a setting regarding image effect, a custom key setting and display setting as setting information regarding operability, and the like.

The driver unit 22 is provided with, for example, a motor driver for a zoom lens drive motor, a motor driver for a focus lens drive motor, a motor driver for a motor of the diaphragm mechanism, and the like.

Such motor drivers each apply a drive current to a corresponding driver in accordance with an instruction from the camera control unit 18 to cause the driver to, for example, move the focus lens or the zoom lens, or open or close a diaphragm blade of the diaphragm mechanism.

The sensor unit 23 collectively indicates various sensors mounted on the imaging device.

For example, an inertial measurement unit (IMU) is mounted as the sensor unit 23, specifically, an angular velocity (gyro) sensor of three axes of pitch, yaw, and roll can detect an angular velocity, and an acceleration sensor can detect acceleration.

Furthermore, there is a case where, as the sensor unit 23, for example, a position information sensor, an illuminance sensor, and the like are mounted.

Furthermore, as a configuration suitable for the imaging device 1 of the present embodiment, a configuration where the sensor unit 23 includes a distance measurement sensor is conceivable.

A distance from the imaging device 1 to the subject can be measured by the distance measurement sensor at the time of image capturing, and the distance information can be added as metadata to the captured image. In the server device 2 and the like, this distance information can be used as information regarding a distance in a depth direction to a subject appearing in the image.

Various types of information detected by the sensor unit 23, such as position information, distance information, illuminance information, and IMU data are added as metadata to the captured image together with date and time information managed by the camera control unit 18.

Note that, as the imaging device 1 used in the embodiment, there is an imaging device capable of simultaneously capturing a plurality of images having different viewpoints. Specifically, there is an imaging device (imaging system) that simultaneously captures a plurality of images viewed from a large number of viewpoints such as five viewpoints or six viewpoints for a certain subject, and in a case where such an imaging device (imaging system) is used, a plurality of images having different viewpoints is captured at the same timing. A plurality of images simultaneously captured from two or more different viewpoints for a certain subject is referred to as a multi-viewpoint image.

In a case where the imaging device 1 captures a multi-viewpoint image, there is a system in which a plurality of lens systems 11, imaging element units 12, and mechanisms associated with such units are provided, and there is also a system in which a plurality of imaging devices 1 is controlled in an interlocked manner to capture an image. Furthermore, there is also a method for forming a plurality of images on one image sensor by a lens.

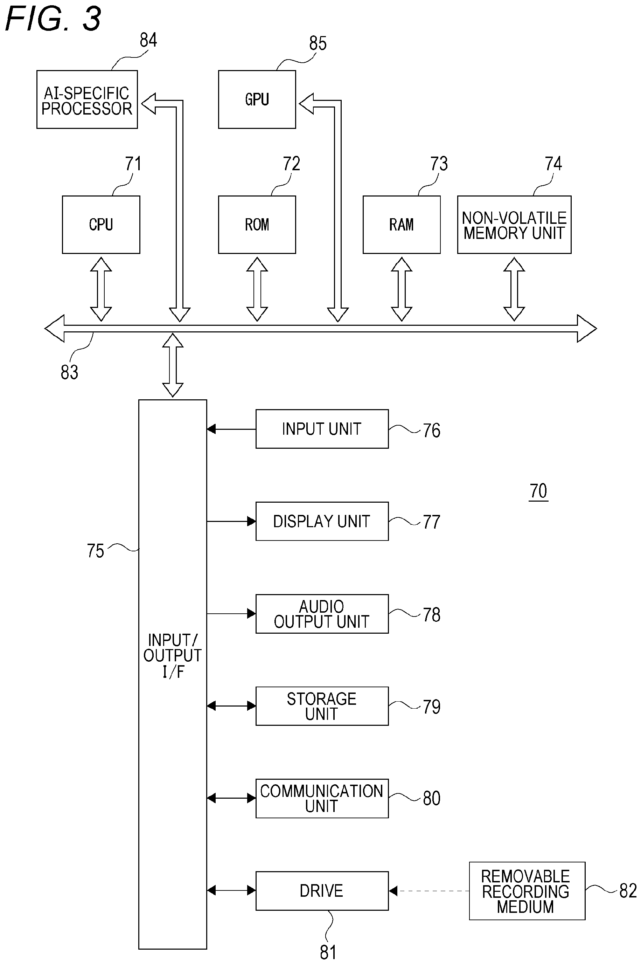

Next, a configuration example of an information processing device 70 applicable as the server device 2 or the client terminal 3 is illustrated in Fig. 3.

A CPU 71 of the information processing device 70 performs various processes in accordance with a program stored in a non-volatile memory unit 74 such as a ROM 72 or an electrically erasable programmable read-only memory (EEP-ROM), or a program loaded from a storage unit 79 into a RAM 73. The RAM 73 further stores, as needed, data and the like necessary for the CPU 71 to perform various processes.

The CPU 71, the ROM 72, the RAM 73, and the non-volatile memory unit 74 are connected to each other over a bus 83. An input/output interface 75 is also connected to the bus 83.

Note that the server device 2 of the present embodiment mainly performs image processing and AI processing, so that in a case where the information processing device 70 is applied as the server device 2, a graphics processing unit (GPU), general-purpose computing on graphics processing units (GPGPU), an AI-specific processor, or the like may be provided instead of the CPU 71 or together with the CPU 71.

Fig. 3 illustrates an example where an AI-specific processor 84 and a GPU 85 are provided.

An input unit 76 including an operation element or an operation device is connected to the input/output interface 75.

For example, it is conceivable that there are various operation elements and operation devices such as a keyboard, a mouse, a key, a dial, a touchscreen, a touchpad, and a remote controller as the input unit 76.

A user's operation is detected by the input unit 76, and a signal corresponding to the input operation is interpreted by the CPU 71.

Furthermore, a display unit 77 including an LCD, an organic EL panel, or the like, and an audio output unit 78 including a speaker or the like are integrally or separately connected to the input/output interface 75.

The display unit 77 is a display unit that outputs various displays, and includes, for example, a display device provided in a housing of the information processing device 70, a separate display device connected to the information processing device 70, or the like.

The display unit 77 displays an image to be subjected to various types of image processes, a moving image to be processed, or the like on a display screen on the basis of an instruction from the CPU 71. Furthermore, the display unit 77 displays various operation menus, icons, messages, and the like, that is, a display as a graphical user interface (GUI), on the basis of an instruction from the CPU 71.

There is a case where the storage unit 79 including a hard disk, a solid-state memory, or the like, and a communication unit 80 including a modem or the like are further connected to the input/output interface 75.

The communication unit 80 performs communication processing over a transmission path such as the Internet and performs wired/wireless communications, bus communications, or the like with various devices.

A drive 81 is also connected to the input/output interface 75 as needed, and a removable recording medium 82 such as a magnetic disk, an optical disc, a magnetooptical disk, or a semiconductor memory is attached as needed.

The drive 81 allows a data file such as an image file, various computer programs, and the like to be read from the removable recording medium 82. The read data file is stored in the storage unit 79, and an image and a sound included in the data file are output by the display unit 77 and the audio output unit 78. Furthermore, a computer program and the like read from the removable recording medium 82 are installed in the storage unit 79 as needed.

In the information processing device 70, for example, software for the processing of the present embodiment can be installed via network communications by the communication unit 80 or via the removable recording medium 82. Alternatively, the software may be prestored in the ROM 72, the storage unit 79, or the like.

For example, in a case where the information processing device 70 is the server device 2, software for processing and the like for the image providing service including the subject of interest setting process and the focusing process to be described below is installed. In this case, the CPU 71 and the like (the AI-specific processor 84, GPU 85, and the like in some cases) function as the control unit 2a in Fig. 1 and perform necessary processing. Various communications performed by the server device 2 are performed via the communication unit 80.

Furthermore, in a case where the information processing device 70 is the client terminal 3, interface processing using the input unit 76, the display unit 77, and the like is performed under the control of the CPU 71 during the processing to be described below. Various communications performed by the client terminal 3 are performed via the communication unit 80.

### <3. Outline of processing and target image>

In the present embodiment, a service that allows a user to view or purchase an image is provided by the server device 2.

In this case, considering a case where a large number of images is made viewable, there is a plurality of images including a plurality of subjects, and when a certain user or some image retrieval software searches for an image of a specific subject, the following problem will arise.

First, there is a case where it is difficult to find the image including the specific subject.

Furthermore, there is a case where the specific subject is included but is out of focus, or another subject is more conspicuous, so that it is not necessarily in a desirable state for viewing the image of the specific subject.

Therefore, in the present embodiment, the server device 2 allows a user who uses the client terminal 3 to easily view an image including a target subject among a large number of images. Furthermore, an image suitable for viewing by the user such as an image in which the target subject is in focus is allowed to be provided to the user.

For example, it is assumed that, when a certain user accesses the server device 2, the server device 2 extracts an image including a child of the user from a large number of photographic images captured at a school athletic meet, and causes the user to view the image, and the child of the user is in focus in the image.

The main processing of the server device 2 for this purpose includes the subject of interest setting process of setting a subject of interest for an image group including a plurality of images, and the focusing process of extracting an image including the subject of interest from the image group and bringing the subject of interest into focus in the extracted image.

In the subject of interest setting process, a subject to be viewed by the user of the client terminal 3 who has accessed the server device 2 is set as the subject of interest. For example, the user himself/herself or a person related to the user such as a child of the user is set as the subject of interest.

For this purpose, the server device 2 performs, for each image of an image group (for example, an image group of a plurality of images captured at a certain athletic meet), a process of creating metadata indicating which subject appears in an image using an inference machine built by machine learning on a plurality of subjects, and the like, so as to allow an image in which a specific subject appears to be extracted from the image group. Then, in response to the access from the client terminal 3, information regarding the user is used, or an inference process based on the user information is performed, so as to set a subject of interest suitable for the user.

The focusing process corresponds to a process of bringing a specific subject into focus, but does not necessarily mean that the subject is brought into complete focus, and includes a process of bringing the subject into a state where the subject is in focus as complete as possible.

As the focusing process, the server device 2 that has set the subject of interest extracts an image in which the subject of interest appears from the target image group, and performs a process of manipulating the extracted image so as to bring the subject of interest into focus (process of bringing the subject of interest into a state where the subject is in focus as complete as possible).

This focusing process can be said to be a process of bringing a subject of interest into focus even if the subject of interest is out of focus in the extracted image.

It is therefore required that an image can be manipulated so as to bring an out-of-focus subject into focus.

One example of such an image is the above-described multi-viewpoint image.

The imaging device 1 captures a multi-viewpoint image, that is, a plurality of images having different viewpoints. The multi-viewpoint image is captured in such a state as to allow a plurality of subjects to be easily image-recognized like pan-focus. Furthermore, a 3D model can be created for a specific subject, and an image process such as an extremely precise focus position change can be performed.

Performing lens simulation processing on the multi-viewpoint image makes it possible to create an image in which a specific subject of interest is in focus, and the depth of field is made as shallow as possible.

When the depth of field is made as shallow as possible, not only bringing the subject of interest into focus, but also blurring another subject makes it possible to emphasize the subject of interest in the image.

Furthermore, examples of the image that can be subjected to the focusing process include an image in which information (distance information) from the distance measurement sensor regarding the subject in the image can be referred to as metadata and the like.

Examples of the distance information from the distance measurement sensor include information indicating the distance to the subject in the depth direction for each pixel (or pixel block including a specific number of pixels) constituting the image. The image for which such distance information can be referred to allows the distance to each subject to be determined. It possible to perform, on the basis of the determination, an image process of making the depth of field as shallow as possible after bringing the subject of interest into focus.

Moreover, even in a case where an image for which distance information cannot be referred to, if the information regarding the distance to the subject in the image can be determined or inferred by machine learning or the like, the distance information can be created, so that the focusing process can be performed. Using a data set obtained as a result of learning a large number of images together with distance information makes it possible to infer the distance to the subject after performing object recognition or the like on the image. That is, it is possible to infer distance information even for an image for which the distance information cannot be originally referred to, and also in this case, it is possible to perform an image process of making the depth of field as shallow as possible after bringing the subject of interest into focus.

### <4. Server device processing>

A processing example performed by the server device 2 will be described.

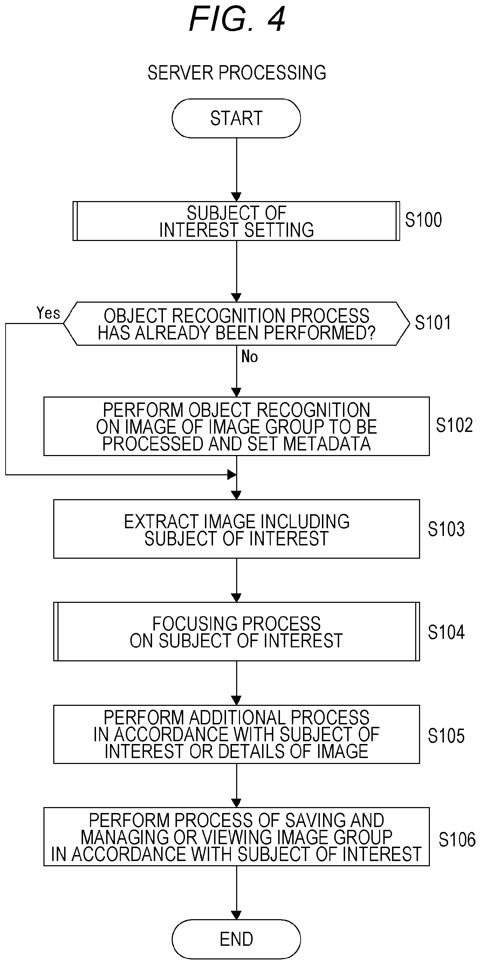

Fig. 4 is a flowchart illustrating a processing example of the server device 2. The server device 2 may perform the process of Fig. 4 on an uploaded image group as needed, or may perform the process of Fig. 4 upon access from the client terminal 3.

Note that the processing of the server device 2 corresponds to processing of the CPU 71 as the control unit 2a. Note that there is another case where the processing is performed by the AI-specific processor 84, the GPU 85, or the like as described above.

In the process of Fig. 4, the control unit 2a performs processing from the subject of interest setting process in step S100 to a process of saving or viewing the image group in accordance with the subject of interest in step S106, but a processing situation is slightly different between a case (first case) where the processing is performed on the uploaded image as needed and a case (second case) where the processing is performed upon access from the client terminal 3.

In the first case, on the image group to be processed, the process of Fig. 4 is repeatedly performed for each person or the like who is the subject, so that an image group subjected to the image extraction and focusing process in accordance with each person or the like is prepared in advance, and a process of waiting for subsequent access from the client terminal 3 is performed.

In the second case, upon access from the client terminal 3, the process of Fig. 4 is performed in response to the access. That is, the processing is processing of selecting an appropriate subject, creating an image group subjected to the image extraction and focusing process in accordance with a person or the like of the subject, and providing the image group for viewing on the client terminal 3.

That is, the first case is processing of preparing an image group for viewing each subject in advance, and the second case is processing of creating an image group for viewing a specific subject upon access.

In step S100 of Fig. 4, the control unit 2a performs the subject of interest setting process.

This is a process of setting a certain person or object in a subject as a subject of interest when a certain image group is set as an image group to be processed.

First, suppose the first case where the process of Fig. 4 is performed in advance on a certain image group uploaded from the imaging device 1, such as an image group including a plurality of images of a certain event.

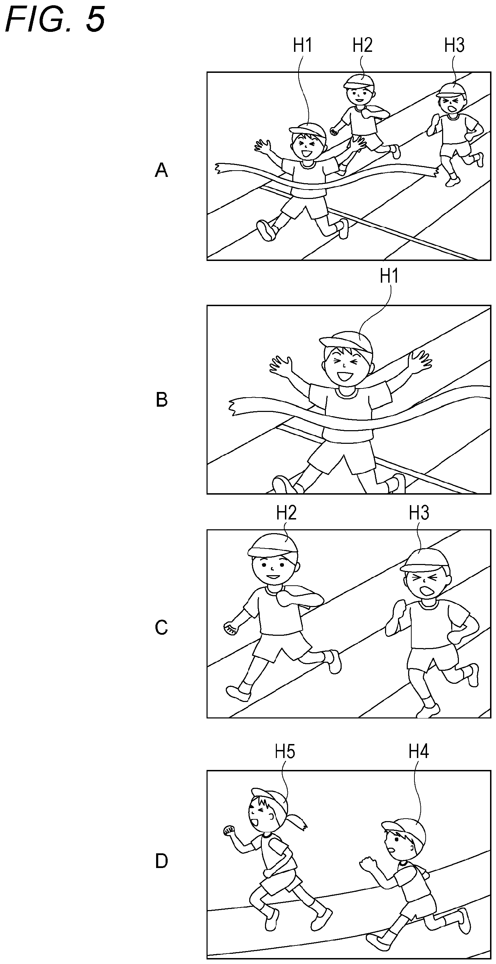

For example, it is assumed that an image group of a plurality of images of a school athletic meet as illustrated in Figs. 5A, 5B, 5C, and 5D is uploaded as the certain image group. A large number of students such as persons H1, H2, H3, ... are each a subject of at least one of the images.

For example, in a case where such an image group is uploaded from the imaging device 1, the control unit 2a sequentially selects one of the subjects (for example, subject persons) appearing in each image of the image group, and performs the process of Fig. 4 for each subject. For example, one of the children appearing in a certain image, such as the person H1, is set as a subject of interest in step S100, and the process of Fig. 4 is performed for the person. This processing is repeated for each of the persons H2, H3, ... in a similar manner while sequentially setting the persons H2, H3 as the subject of interest. This allows the image group subjected to the image process for each person to be saved.

Furthermore, in the second case where the process of Fig. 4 is performed upon access from the client terminal 3 for the purpose of viewing such an image group, the control unit 2a sets the subject of interest in step S100 in accordance with the user of the client terminal 3 and performs the process of Fig. 4 to provide images viewable on the client terminal 3.

It is conceivable that there are various examples of the subject of interest setting process performed by the control unit 2a in step S100, and such examples will be described later.

In step S101, the control unit 2a determines whether or not the object recognition process has been performed on the image group to be processed, and if the object recognition process has been performed, the processing proceeds to step S103. Otherwise, the processing proceeds to step S102.

The object recognition process is a process of setting information indicating a subject appearing in each image as metadata for the image. It is conceivable that there are various objects to be recognized, and an example where a person is to be recognized will be described, for example.

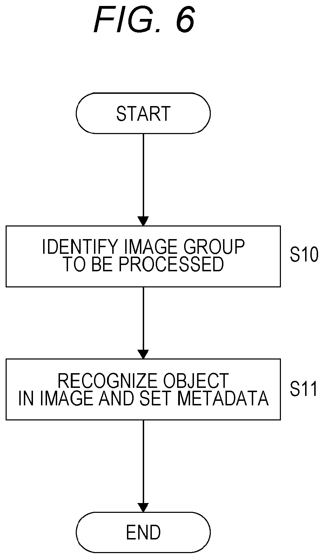

Fig. 6 illustrates an example of the object recognition process.

In step S10, the control unit 2a identifies an image group to be processed. That is, one of image groups uploaded to the server device 2 is set as an image group to be subjected to the object recognition process.

In step S11, the control unit 2a performs the object recognition process on each image of the image group to be processed to recognize a person appearing in each image, and sets metadata.

It is conceivable that there is an example where metadata indicating that the persons H1, H2, H3 are present as subjects is set for the image of Fig. 5A, and metadata indicating that the person H1 is present as a subject is set for the image of Fig. 5B, for example.

Note that an object subjected to the object recognition process is not limited to a person, and may be any object to be imaged. Examples of the object to be subjected to the object recognition process include a living thing such as an animal, a bird, and an insect, a plant, a nonliving thing such as a building and an article, a landscape, a crowd, a sea, the sky, a sunset, a sunrise, a mountain, a forest, and the like. The examples further include a region, a shape, and the like in the image.

In step S101 of Fig. 4, a determination is made as to whether or not the object recognition process as illustrated in Fig. 6 has already been performed on the image group currently subjected to the process of Fig. 4.

If the object recognition process has not been performed, the control unit 2a performs the process of Fig. 6 in step S102.

In step S103 of Fig. 4, the control unit 2a extracts an image including the subject of interest set in step S100 from the image group currently being processed. The object recognition process is performed as described above, so as to determine which image includes the subject of interest with reference to the metadata of each image and extract a corresponding image. For example, in a case where the subject of interest is the "person H2", an image determined that the person H2 appears as illustrated in Figs. 5A and 5C is extracted.

In step S104, the control unit 2a performs the focusing process of bringing the subject of interest into focus for each of the extracted one or plurality of images.

That is, even if the extracted certain image is in a state where the subject of interest is out of focus, the image process of bringing the subject of interest into focus or bringing the subject of interest into a state where the subject of interest is in focus as complete as possible is performed. Needless to say, for an image in which the subject of interest is originally in focus, the process need not be performed, or may be performed so as to emphasize the subject of interest.

Therefore, in the focusing process, as described above, the process of bringing the subject of interest into focus and making the depth of field as shallow as possible is performed.

Note that the depth of field may be forcibly adjusted to be deeper.

A detailed example of the procedure of the focusing process will be described later.

In step S105, the control unit 2a performs an additional process in accordance with the subject of interest or image content.

The additional process broadly refers to a process that is performed to enhance the value of viewing the image in addition to the focusing process.

Examples the additional process includes an image process of changing the hue, the brightness, or the like of the image.

For example, various types of processes such as a luminance process, a contrast process, a sharpness process, and a saturation process are performed to make the image higher in image quality or better in appearance.

Furthermore, a special process, an image effect, and the like may be performed as the additional process.

Furthermore, a process such as trimming or superimposition of another image or a character may be performed as the additional process.

Furthermore, an additional process of adding a sound or a sound effect to an image is also conceivable.

In such additional processes, it is conceivable that an appropriate process parameter is selected or an image effect is set in accordance with attribute information (age, sex, etc.) of the subject of interest, or a color of clothing, a color of skin, an expression, a feeling of the subject of interest, and the like that can be determined from the image.

Furthermore, it is also conceivable that an appropriate process parameter is selected in accordance with a place, time, weather, or the like as the image content.

For example, it is possible to optimize, on the basis of the position information in the metadata of the image, the image so as to make the image appropriate to a corresponding location. For an image of seaside, it is possible to perform a process of determining that a blue portion on a lower side of the image shows a sea and making the color of the sea vivid.

Furthermore, if a shooting time and data can be determined with reference to the date and time information in the metadata, and it can be determined that the image is captured at a place famous for cherry blossoms in the season of cherry blossoms with reference to the date and time information together with the position information, it is also possible to determine that a pink portion shows cherry blossoms and optimize the hue.

Furthermore, it is conceivable that there are various image manipulations as the additional process. For example, it is also possible to form an image subjected to lighting change, viewpoint change, or the like.

Furthermore, an image process of causing the image to appear as if the image is captured in the morning, an image process of causing the image to appear as if the image is captured in the night, a process of changing the orientation of the image from a front view to a side view, and the like are also conceivable.

As a process of changing the atmosphere of the image, a process of adjusting a comical atmosphere or a serious atmosphere is also conceivable. Various settings of a corresponding parameter may be changed. For example, an image process parameter can be set or varied, for example, comical 80%: serious 20%, in accordance with user's preference.

Furthermore, it is conceivable that a favorite image process is predicted from a user's selection record and recommended.

Furthermore, it is conceivable that the user designates a user's preference tendency for photographs, for example, designates a favorite image contributor, and the image is manipulated in accordance with the preference tendency.

Note that the additional process in step S105 is not necessarily performed, and an example where the processing proceeds to step S106 after step S104 is also conceivable.

Furthermore, the content of the additional process may be uniformly applied to each image extracted in step S103, or the content may be changed for each image.

For example, the process of changing the hue in accordance with the weather may be applied to all images, and it is conceivable that the process in accordance with the expression of the subject of interest is applied to each specific image.

In step S106, the control unit 2a saves and manages each image extracted in step S103 and processed in steps S104 and S105 as the image group associated with the subject of interest or provides each image for viewing.

In a case where the process of Fig. 4 is performed on each subject person after uploading a certain image group as the first case, the processing up to step S105 makes it possible to extract and obtain, for a certain person, an image in which the person appears and that has been subjected to the focusing process. Therefore, in step S106, the control unit 2a saves and manages the image group in the storage 10, for example, as an image group that is provided when the person or a person concerned exists.

For example, the process of Fig. 4 is sequentially performed on each of the persons H1, H2, H3, ... in Fig. 5 as the subject of interest, so that one or a plurality of images extracted and subjected to the focusing process in accordance with each person is created, and saved and managed. That is, an image group particularly for each subject person, such as an image group for the person H1, an image group for the person H2, ..., and the like, is prepared for subsequent access.

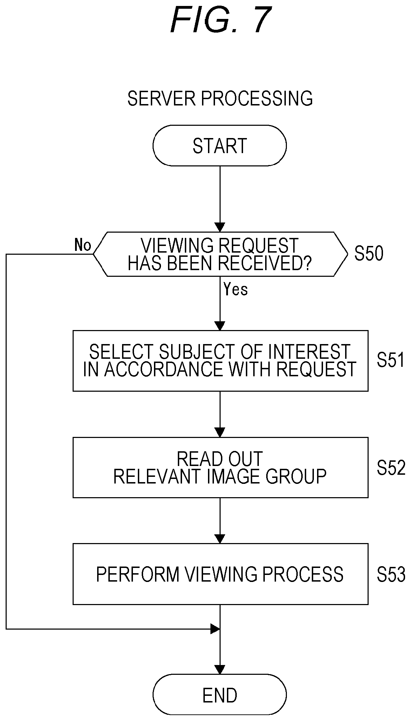

As described above, an image group of images associated with each subject person is created in advance, and saved and managed, so that the control unit 2a can perform the process of Fig. 7 upon access from the client terminal 3.

The control unit 2a checks for a viewing request from the client terminal 3 in step S50 of Fig. 7.

In a case where there is a viewing request, the control unit 2a selects the subject of interest in accordance with the request in step S51. For example, in a case where the access is from a guardian of the person H1, the person H1 is set as the subject of interest.

Then, in step S52, the control unit 2a reads out, from the storage 10, an image group already created by the process of Fig. 4 and associated with the person H1, and provides an image as a viewing process in step S53. For example, one or a plurality of images extracted for the person H1 and subjected to the focusing process and the like is made viewable on a website provided by the server device 2 from the client terminal 3.

Needless to say, not only the process of making an image viewable on the website, but also a process of, for example, downloading an image to the client terminal 3 may be performed. Any method may be applied to such a process as long as an image is made viewable by the user.

This allows the user of the client terminal 3 to view, for example, an image of his/her child as an image suitable for viewing in which his/her child is in focus without taking time and effort for retrieving the image of his/her child or the like from a large number of images.

Furthermore, in a case where the process of Fig. 4 is performed upon access from the client terminal 3 as the second case described above, it is sufficient if the viewing process is performed in step S106. That is, the processing up to step S105 makes one or a plurality of images extracted for the subject of interest and subjected to the focusing process and the like viewable on, for example, the website provided by the server device 2 from the client terminal 3 in step S106. Alternatively, such an image may be downloadable to the client terminal 3. This allows the user to view the image.

Note that the image viewable by the user is an image subjected to the focusing process and the additional process, but it is also possible for the user to change or designate a degree of the focusing process, the content of the additional process, a parameter, or the like while viewing images.

For example, making the depth of field deeper brings the whole of the image into focus, or enabling the user to change a type or parameter of the image process or the image effect while viewing images and performing an operation allows the user to obtain a desired image.

Alternatively, a plurality of images for which the parameter of the focusing process is changed or a plurality of images for which the content or parameter of the additional process is changed may be prepared so as to allow the user to select an image that the user wants to purchase.

### <5. Focusing process>

Here, a detailed process example of the focusing process in step S104 of Fig. 4 will be described.

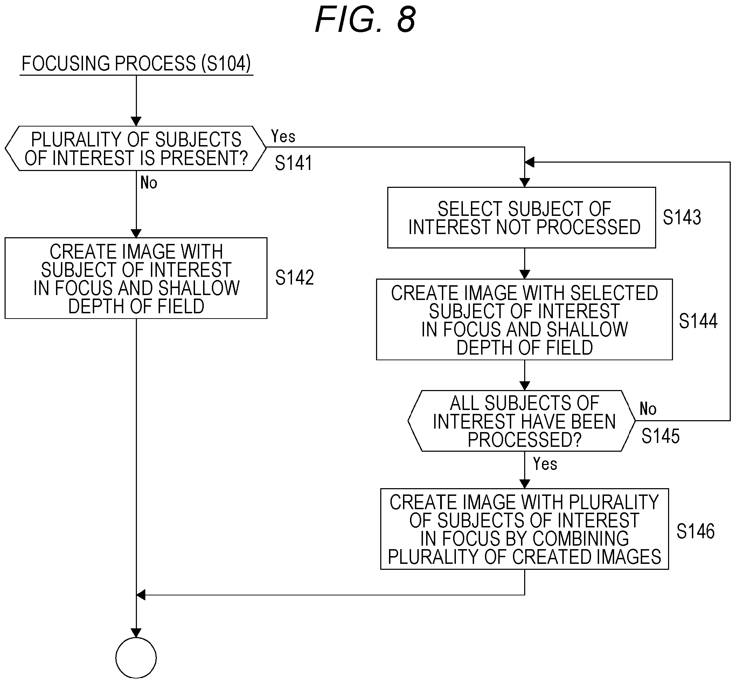

Fig. 8 illustrates an example of the focusing process on one image.

That is, on each image extracted in step S103 of Fig. 4, the process of Fig. 8 is performed.

Note that the number of subjects of interest set in step S100 of Fig. 4 may be one, or may be plural.

If only one person can set as the subject of interest, it is sufficient if step S142 of Fig. 8 is performed as the focusing process.

That is, the process of creating an image with the person as the subject of interest brought into focus and the depth of field reduced is performed.

Therefore, in a case where a process method under which the setting of the subject of interest is limited to one person is employed, only step S142 of Fig. 8 needs to be performed on each extracted image as the focusing process in step S104 of Fig. 4.

On the other hand, in a case where one person or a plurality of persons can be set as the subject of interest, the process of Fig. 8 is performed as the focusing process. For example, a case where not only a certain person, but also his/her friend is set as the subject of interest is conceivable.

In step S141, the control unit 2a causes the processing to branch in a manner that depends on whether one or a plurality of persons is set as the subject of interest. In a case where only one person is set as the set subject of interest, the processing proceeds to step S142 for each image, and only the above-described process needs to be performed.

Note that, even if a plurality of persons is set as the subjects of interest, the subjects of interest corresponding to the plurality of persons do not necessarily appear in all the images extracted in step S103 of Fig. 4. For example, in a case where two persons are set as the subjects of interest, there is an image in which the two persons both appear or an image including only one of the two persons.

Therefore, even with a plurality of subjects of interest set, the processing may proceed from step S141 to step S142 even in a case where only one subject of interest appears in one image currently subjected to the focusing process. That is, the control unit 2a performs the process of creating an image with the one person set as the subject of interest, appearing in the image, brought into focus and the depth of field made reduced.

In a case where a plurality of persons is set as the subjects of interest, and an image to be subjected to the focusing process includes a plurality of subjects of interest, the control unit 2a proceeds from step S141 to step S143 and selects one of the subjects of interest in the image to be processed.

Then, in step S144, the control unit 2a performs the process of creating an image with the selected subject of interest in focus and the depth of field reduced.

In step S145, it is confirmed whether or not all the subjects of interest in the image has been processed.

In a case where there is an unprocessed subject of interest in the image currently subjected to the focusing process, the control unit 2a returns to step S143 and selects the unprocessed subject of interest. Then, in step S144, the process of creating an image with the selected subject of interest in focus and the depth of field reduced is performed.

As described above, an image whose focus has been adjusted is created for each subject of interest in step S144.

When all the subjects of interest appearing in the image currently being processed has been processed, the control unit 2a proceeds from step S145 to step S146.

In step S146, the control unit 2a combines the images created in step S144 to create an image in which all the subjects of interest are in focus.

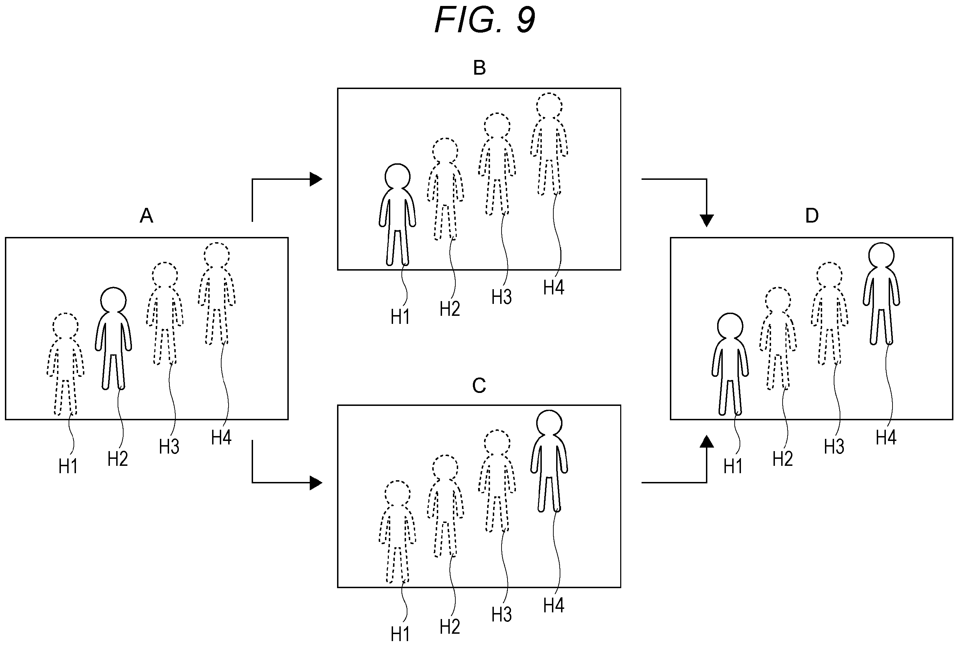

This process is schematically illustrated in Fig. 9.

It is assumed that Fig. 9A illustrates one of the images extracted in step S103 of Fig. 4 because the subject of interest appears in the image. It is assumed that the persons H1, H2, H3, H4 appear in the image, and their respective distances in the depth direction are different from each other.

Furthermore, in each of Figs. 9, it is assumed that a person represented by a solid line is in focus and a person represented by a dashed line is out of focus.

Now, it is assumed that the persons H1 and H4 are set as the subjects of interest.

At the time of actual image capturing, however, the focal point is placed at the distance of the person H2, so that the persons H1, H4 set as the subjects of interest are out of focus in the original image of Fig. 9A.

In such a case, in steps S143 and S144 of Fig. 8, the control unit 2a first performs the focusing process on the person H1 to create an image in which the person H1 is in focus as illustrated in Fig. 9B.

The control unit 2a further repeats steps S143 and S144 to perform the focusing process on the person H4 to create an image in which the person H4 is in focus as illustrated in Fig. 9C.

Then, in step S146, the control unit 2a combines the images of Figs. 9B and 9C to create an image in which the persons H1, H4 are in focus as illustrated in Fig. 9D.

As described above, it is possible to obtain an image in which both the persons H1, H4 present at different positions in the depth direction are in focus although the image cannot be obtained by actual image capturing.

Performing the process of Fig. 8 as described above on each image extracted in step S103 of Fig. 4 makes it possible to obtain an image group in which one or a plurality of set subjects of interest is in focus in each image.

Note that, in the combining process, an image in which all the plurality of subjects of interest present at different depth positions is in focus is obtained, but it is also possible to perform a process of bringing a plurality of subjects of interest into focus by, for example, lens simulation processing for each region in an image without performing the combining process.

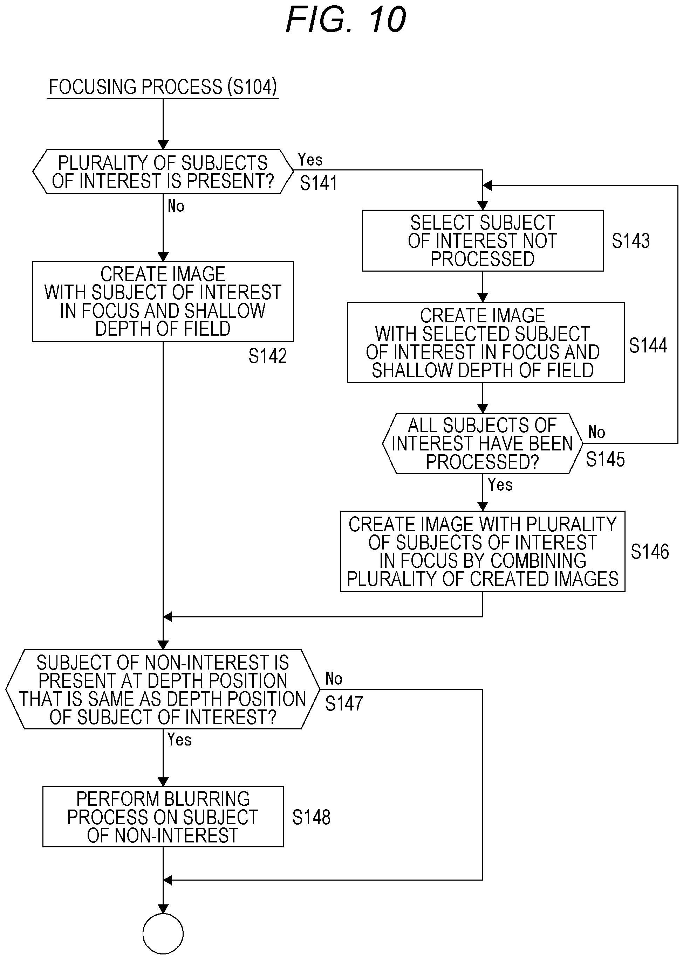

Fig. 10 illustrates another example of the focusing process.

Note that steps S141 to S146 are the same as in Fig. 8, and thus no description will be given below of steps S141 to S146.

In the example of Fig. 10, in step S147, the control unit 2a determines whether or not a subject of non-interest is present at a position in the depth direction that is the same as the position of the subject of interest. Then, if the subject of non-interest is present, a blurring process is performed on of the subject of non-interest in step S148.

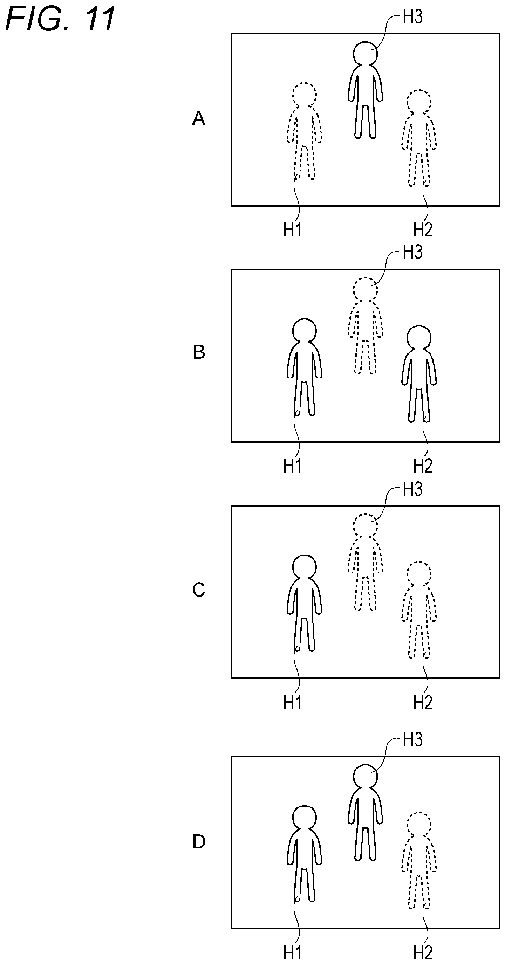

This is schematically described with reference to Fig. 11.

An image of Fig. 11A is a captured image example where the persons H1, H2 are present at the same position in the depth direction relative to the imaging device 1 and are out of focus (each represented by a dashed line). The person H3 present at a different depth position is in focus (represented by a solid line).

Here, it is assumed that the person H1 is set as the subject of interest.

For example, when the focusing process of Fig. 8 is performed, a process of bringing the person H1 into focus is performed by the process in step S142, so that an image as illustrated in Fig. 11B is obtained. That is, not only the person H1 but also the person H2 at the same depth position is in focus.

Needless to say, such an image may be provided to the user, but a process of emphasizing the person H1 may be performed.

Therefore, in the example of Fig. 10, the blurring process is performed on the person H2 who is the subject of non-interest. For example, the created image of Fig. 10B is combined with a portion of the original image of Fig. 10A corresponding to the person H2. Alternatively, the portion corresponding to the person H2 is blurred by lens simulation processing. As a result, for example, as illustrated in Fig. 11C, it is also possible to create an image in which only the person H1 who is the subject of interest is emphasized.

Furthermore, considering a case where the persons H1, H2 are set as the subjects of interest, when the process example of Fig. 8 is applied, an image in which all of the persons H1, H2, H3 are in focus is obtained from the image of Fig. 11A. In a case where the process example of Fig. 10 is applied, it is possible to create an image in which only the plurality of subjects of interest is in focus as illustrated in Fig. 11D by performing the blurring process on the person H2.

### <6. Subject of interest setting>

Various examples of the subject of interest setting process performed in step S100 of Fig. 4 will be described.

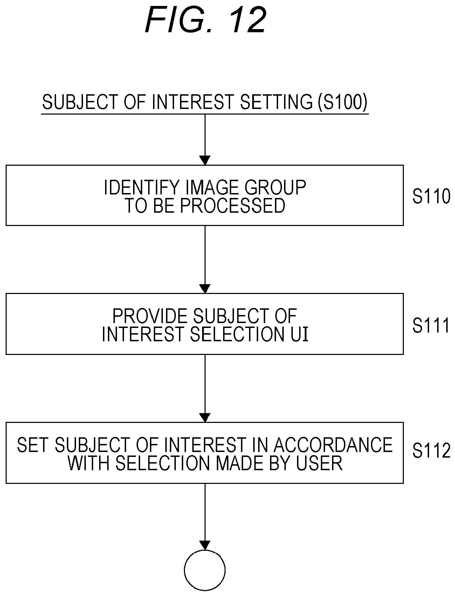

It is assumed that each of the following examples of Figs. 12 to 16 and Fig. 18 is applied to the subject of interest setting process in step S100 in the second case where the process of Fig. 4 is performed in response to user access or to a case where the subject of interest is selected in step S51 of Fig. 6. That is, this is an example where one or a plurality of subjects of interest is set under a situation where the user as a viewer is identified.

First, an example where the subject of interest is set on the basis of operation information from the client terminal 3 will be described with reference to Fig. 12.

A case where, for example, when the user using the client terminal 3 accesses the website of the server device 2 and performs a login process, the process of Fig. 4 is performed is conceivable.

In step S110 of Fig. 12, the control unit 2a identifies an image group to be processed. This is, for example, a process of identifying an image group to be subjected to the process of Fig. 4 from the image groups uploaded from the imaging device 1 and stored in the storage 10. For example, an image group of a specific athletic meet is set as the image group to be processed.

The image group may be identified on the basis of, for example, user information or designation by the user. For example, it is conceivable that when the user who has participated in an event inputs code information issued for an image service and accesses the server device 2, an image group of the event is identified on the basis of the code information.

Alternatively, a list of viewable image groups may be displayed on the website, and the user may perform a selection operation.

In step Sill, the control unit 2a provides, to the client terminal 3, a UI screen for selecting the subject of interest.

Then, in step S112, the control unit 2a sets the subject of interest in accordance with the user's selection operation.

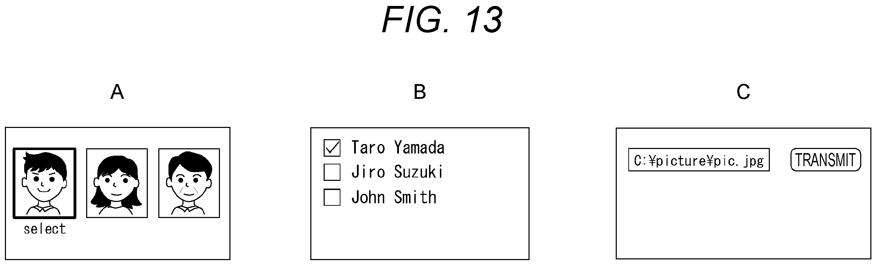

Fig. 13 illustrates an example of the UI screen provided to the client terminal 3 in step S111.

Fig. 13A is an example where a face image is presented. The control unit 2a extracts a face image of a person who is a subject in the image group to be processed, and displays a list image in which face images are arranged as illustrated on the website, for example, so as to allow the user to make a selection. When the user performs an operation of selecting a specific face by mouse operation, cursor operation, enter operation, touch operation, or the like, the control unit 2a sets the person corresponding to the selected face as the subject of interest.

Fig. 13B is an example where a list of person names is presented. The control unit 2a identifies a personal name of a person who is a subject in the image group to be processed by personal recognition, DB retrieval, or the like, displays a list image in which names and the like are arranged as illustrated, and allows the user to make a selection. When the user performs an operation of selecting a specific name by mouse operation, cursor operation, enter operation, touch operation, or the like, the control unit 2a sets the person corresponding to the selected name as the subject of interest. The user may input the name by voice.

Note that, for a personal name of an ordinary person, information or the like in which a name is associated with a face of an event participant in advance is necessary, but for example, for an image group in which a famous person is a subject, the name of the subject person can be identified on the basis of various types of DB information.

Fig. 13C illustrates an example where the user who has accessed the server device 2 uploads an image of a person that the user wants to set as the subject of interest. For example, an interface for inputting the illustrated image file, to transmit the image file for uploading is prepared. The user uses this function to upload an image of his/her child.

In accordance with such a user's operation, in step S112, the control unit 2a extracts a face from the uploaded image, performs a process of recognizing a feature of the face, and sets a person corresponding to the face image as the subject of interest.

Note that the image to be uploaded is not limited to an image of only a face, and may include another subject as long as the face is included. In a case where a plurality of face images is included in the uploaded image, it is also conceivable that the control unit displays each face in a list as illustrated in Fig. 13A to allow the user to make a selection.

Alternatively, it is conceivable that not only a face image but also an image of an article that the user wants to set as the subject of interest is uploaded.

The above is an example, and various examples are conceivable where an interface screen for operation is provided to the user and the subject of interest setting is performed on the basis of the user's operation.

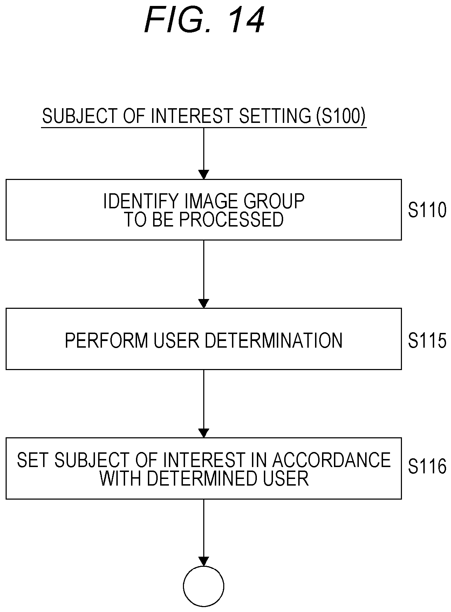

Fig. 14 illustrates an example where the control unit 2a sets the subject of interest on the basis of user information regarding an access source using the client terminal 3. Note that, hereinafter, processes similar to the processes as described above are denoted by the same step numbers, and no detailed description will be given below of such processes.

After identifying the image group to be processed in step S110, the control unit 2a performs user determination in step S115. That is, the user who has accessed this time is determined from a login ID, user identification information, and the like. In a case where face authentication, retina authentication, fingerprint authentication, or the like is used at the time of login, the user can be identified on the basis of such pieces of information.

Then, in step S116, the control unit 2a sets the subject of interest in accordance with the determined user.

For example, in a case where a DB in which a face of the user, a face of a family member as a person related to the user, a face of a friend, a face of a co-worker, and the like are registered is prepared for each user, it is possible to identify a related person or a face of the related person on the basis of the identification of the user.

Furthermore, it is also possible to use information regarding a certain group, a company, a circle, or the like to which the user belongs.

That is, in a case where there is information that can be used to determine a related person when the user is identified, one or a plurality of related persons can be automatically set as the subject of interest in accordance with the identification of the user. It is therefore possible to extract a relevant image by setting the user or the related person as the subject of interest from the image group to be processed.

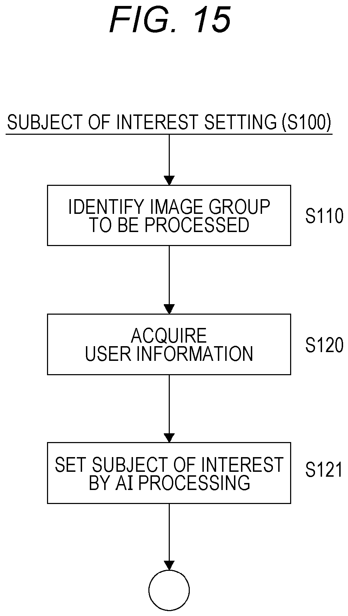

Fig. 15 illustrates an example where the control unit 2a performs an inference process using the user information regarding the access source to set the subject of interest.

After identifying the image group to be processed in step S110, the control unit 2a acquires the user information in step S120.

Then, in step S121, the control unit 2a performs the inference process on the basis of the user information by AI processing to set the subject of interest.

In this case, it is conceivable that the user information includes attribute information, history information, social networking service (SNS) information, follow information regarding an SNS or the like of the user who has accessed, images stored in the storage 10 as a private photo library of the user, and the like. That is, it is conceivable that there are various types of user personal information that can be acquired by the server device 2.

It is possible to infer that a subject appearing in an image on the SNS or in the private photo library of the user is the user himself/herself or a related person. In particular, a person who appears together with the user himself/herself is highly likely to be a related person such as a family member. It is also possible to increase accuracy in inference with reference to information regarding a family structure of the user.

The control unit 2a extracts a face image or the like of the user himself/herself or a related person on the basis of the user information using the function of the AI engine 8, for example. Furthermore, it is also possible to infer a person desired by the user as the subject of interest by analyzing the attribute information such as a family structure, an age, and a hobby.

It is possible to set, on the basis of such inference, a person such as the user himself/herself or a related person in an image of the image group as the subject of interest.

For example, if a face image of a person related to the user can be inferred from the user information, it is sufficient to detect a matching face in the image group to be processed to set a subject person corresponding to the face image as the subject of interest.

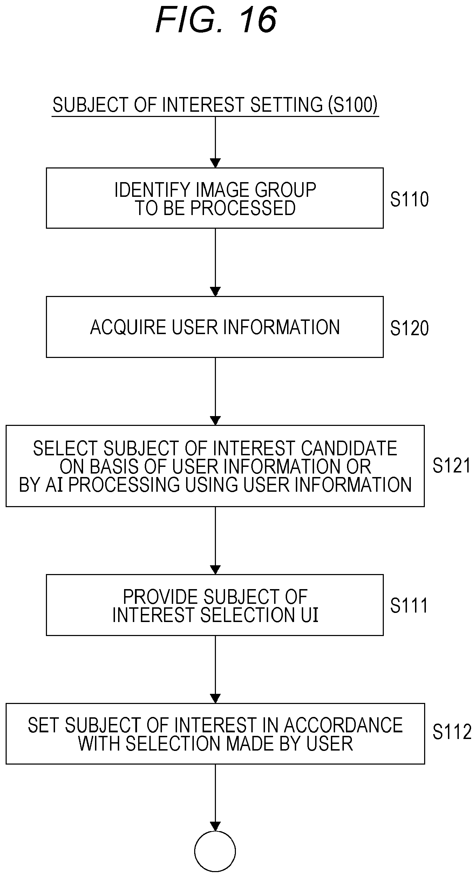

Fig. 16 is an example where inference is performed on the basis of the user information as illustrated in Fig. 15, but a subject of interest candidate is set on the basis of a result of the inference and recommended to the user.

After identifying the image group to be processed in step S110, the control unit 2a acquires the user information in step S120.

Then, in step S122, the control unit 2a sets a subject of interest candidate on the basis of the user information or a result of the inference process based on the user information by AI processing.

In step S111, the control unit 2a provides, to the client terminal 3, a UI screen for selecting the subject of interest from the subject of interest candidates.

Then, in step S112, the control unit 2a sets the subject of interest in accordance with the user's selection operation.

As described for the processes of Figs. 14 and 15, there is a case where a related person can be identified on the basis of the user information or by the inference process based on the user information. Therefore, the user himself/herself or a related person determined in such processes is set as the subject of interest candidate. The face image, the name, and the like of the subject of interest candidate are presented as illustrated in Figs. 13A and 13B, for example, so as to allow the user to make a selection.

When the subject of interest candidate is presented to cause the user to select the subject of interest candidate, a subject of interest setting desired by the user tends to be performed.

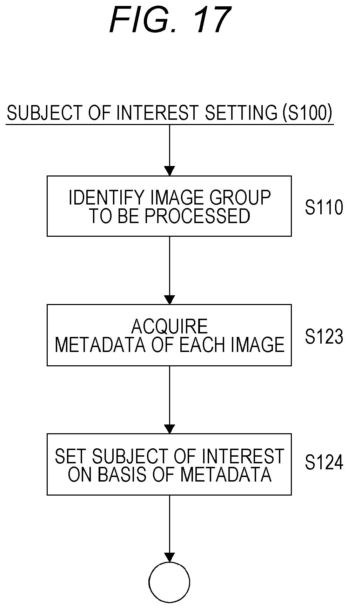

The example of Fig. 17 is an example applicable not only to a case upon access from the user (the above-described second case) as in the above-described examples, but also to, for example, a case where the process of Fig. 4 is performed in advance at a timing different from the user access (the above-described first case) as the process in step S100.

In the example of Fig. 17, the control unit 2a sets the subject of interest on the basis of additional information of an image.

After identifying the image group to be processed in step S110, the control unit 2a acquires metadata of each image in step S123.

Then, in step S124, the control unit 2a sets the subject of interest on the basis of the acquired metadata.

For example, there are shooting position information, shooting date and time information, and the like as metadata added to an image, and the subject of interest is set on the basis of such metadata. For example, determining the shooting date and time and location makes it is possible to determine a location such as a tourist spot or facility, an event that took place, sports, or the like by DB retrieval.

In a case where it is determined that the image group corresponds to an image group captured at a certain event venue, it is possible to determine a person or an article as a noteworthy subject for the images of the event.

Furthermore, in a case of an image group captured at a certain tourist spot in a specific season, it is possible to determine a noteworthy article, such as a local specialty at the tourist spot or a popular spot.

Furthermore, if an event such as an athletic meet can be determined, for example, a finish line tape, a baton, a ball used for a ball-toss game, or the like may be set as a noteworthy subject that is an object suitable for the athletic meet and to be in focus.

Therefore, such an article and person are automatically set as subjects of interest.

Note that, in a case where a location or date and time can be determined by image analysis, such information can also be treated as additional information of an image.

Therefore, it is also conceivable that the subject of interest is automatically determined on the basis of information that can be inferred from an image of an image group.

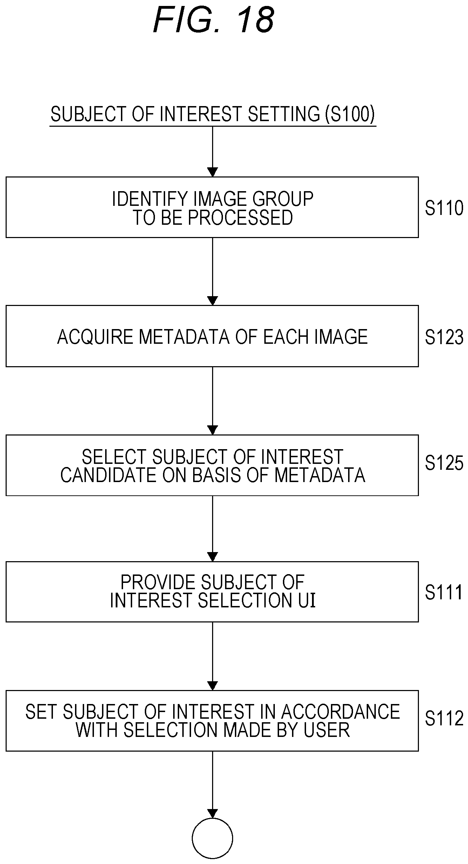

Fig. 18 is an example where a determination based on the metadata is performed as illustrated in Fig. 17, but the subject of interest candidate is set on the basis of a result of the determination and recommended to the user.

After identifying the image group to be processed in step S110, the control unit 2a acquires metadata of each image in step S123.

Then, in step S125, the control unit 2a sets the subject of interest candidate on the basis of the acquired metadata.

In step S111, the control unit 2a provides, to the client terminal 3, a UI screen for selecting the subject of interest from the subject of interest candidates.

Then, in step S112, the control unit 2a sets the subject of interest in accordance with the user's selection operation.

As described above, it is possible to determine a location or event from the shooting position information and the shooting date and time information to infer the subject of interest, but the subject of interest is presented to the user as a candidate.

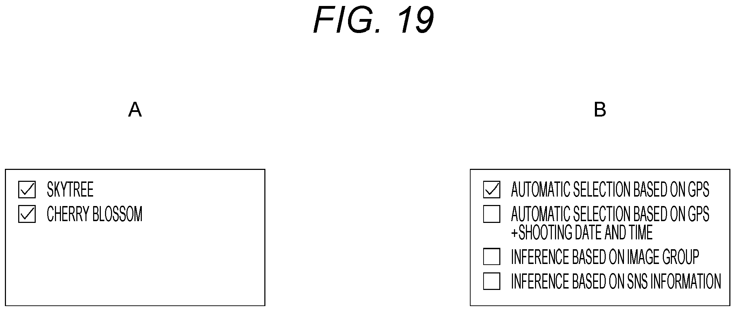

For example, when the image group is determined from meta information to be an image group of images captured at a place famous for cherry blossoms near Skytree in the season of cherry blossoms, "Skytree" and "cherry blossom" are set as subject of interest candidates, and a UI screen for selection as illustrated in Fig. 19A is provided to the user.

Then, any one or a plurality of the subject of interest candidates is set as the subject of interest in accordance with user's operation.

This makes it possible to provide a UI that is easy for the user to make a selection in accordance with the candidate inference.

Note that it is also conceivable that an object name list prepared in advance is presented to the user to cause the user to make a selection, regardless of the shooting position and date and time, in a similar manner to Fig. 19A.

Although the examples of the subject of interest setting have been described above, each subject of interest setting process may be performed in combination with another subject of interest setting process. Furthermore, various other examples of the setting process are conceivable.

Furthermore, how to set the subject of interest may be set by the user.

For example, as illustrated in Fig. 19B, process methods such as "automatic selection based on GPS" for setting the subject of interest on the basis of the position information, "automatic selection based on GPS and shooting date and time" for setting the subject of interest on the basis of the position information and the date and time information, "inference based on image group" for setting the subject of interest by the inference process based on a face image or the like extracted from an image group, and "inference based on SNS information" for setting the subject of interest by the inference process using the SNS information of the user may be presented to the user so as to allow the user to make a selection.

### <7. Summary and modification>

According to the above-described embodiment, the following effects can be obtained.

The server device 2 of the embodiment includes the control unit 2a that performs the subject of interest setting process of setting a subject of interest for an image group including a plurality of images, and the focusing process of extracting an image including the subject of interest from the image group and bringing the subject of interest into focus in the extracted image.

When the server device 2 performs such processes, for example, in an image group for a certain event such as an athletic meet, an image in which a subject desired by a certain user is in focus is created. For example, it is assumed that a professional photographer captures images of an athletic meet or the like, uploads a large number of images to the server device 2, and a user such as a guardian selects an image to be purchased on the client terminal 3. In such a case, an image of a subject of interest suitable for a certain user, such as a child of the user, is extracted and can be prepared as an image brought into focus by focusing. That is, even if a professional photographer captures images of a large number of persons without sticking to a specific subject, it is possible to prepare, for each user, an image in which a subject to which the user wants to pay attention is in focus.

The example has been described where the server device 2 of the embodiment causes the control unit 2a to perform the process (step S106 of Fig. 4 and step S53 of Fig. 7) of making a plurality of images including the image subjected to the focusing process viewable on the client terminal 3.

This allows the user to view, by accessing the server device 2 using the client terminal 3, an image group of images in which a subject suitable for the user, for example, the child of the user appears, and the child of the user is in focus.

That is, the user need not retrieve an image of the target subject from a large number of images, and the presented image is in a state suitable for viewing of the target of interest.

Therefore, for example, it is possible to eliminate difficulty in finding an image that the user wants to purchase among a large number of photographic images, or a situation in which the child of the user appears but is out of focus.

In the embodiment, the example has been described where the server device 2 performs the process of bringing the subject of interest into focus and reducing the depth of field as the focusing process on an image (see Fig. 8).

This makes it possible to obtain an image in which the subject of interest has been emphasized as if the subject of interest is originally paid attention, and it is expected that a more desirable image for the user can be provided.

In the embodiment, the example has been described where the control unit 2a sets a plurality of subjects as subjects of interest in the subject of interest setting process and performs the image process of bringing each of the plurality of subjects of interest into focus as the focusing process (see Figs. 8 and 9).

For example, since the number of subjects of interest is not limited to one, it can be expected that a more desirable image for the user can be provided by performing the focusing process on the plurality of subjects of interest. For example, in an image in which a child of the user and his/her friend appear, it is desirable that both the child and the friend are in focus in the image.

In the embodiment, the example has been described where the control unit 2a sets a plurality of subjects having distances in the depth direction from the imaging device 1 at the time of image capturing different from each other as subjects of interest in the subject of interest setting process, and performs the image process of combining images in which each subject of interest is in focus to create an image in which each of the subjects of interest is in focus as the focusing process (see Figs. 8 and 9).

This makes it possible to obtain an image in which even a plurality of subjects of interest having distances in the depth direction different from each other to such an extent that the subjects cannot be in focus at the same time is in focus. That is, it is possible to provide an image that cannot be obtained by normal image capturing.

In the embodiment, the example has been described where the control unit 2a performs the process of blurring a subject of non-interest as the focusing process (see Figs. 10 and 11).

Blurring a subject that is not particularly paid attention even if the subject has been brought into focus by the focusing process makes it possible to create and provide an image in which the subject of interest has been emphasized.

In the embodiment, the example has been described where the control unit 2a sets the subject of interest on the basis of the operation information from the client terminal 3 that is an external device (see Figs. 12 and 13) .

A UI screen is provided to the client terminal 3 so as to allow the user to designate a desired subject of interest. This makes it possible to provide an image in which, for example, the subject of interest desired by the user has been brought into focus.

In the embodiment, the example has been described where the control unit 2a presents, to the client terminal 3, list information regarding subjects of interest and sets the subject of interest on the basis of an operation on the list information (see Figs. 12, 13, 18, 19).

As a UI screen to be provided to the client terminal 3, a face list, a name, an object name, or the like is listed and presented, so as to allow the user to easily designate a desired subject of interest.

In the embodiment, the example has been described where the control unit 2a sets the subject of interest on the basis of the image information transmitted from the client terminal 3 (see Figs. 12 and 13).

Uploading a face image or an object image from the client terminal 3 allows the server device 2 to determine which subject (individual, object) the user desires as the subject of interest. Then, it is only required that a person or an object that coincides with the image be set as the subject of interest.

In the embodiment, the example has been described where the control unit 2a sets the subject of interest on the basis of the user information regarding the access source using the client terminal 3 (see Fig. 14).

A related person, a face, and the like are managed on the basis of the user who has accessed (for example, a user who has logged in to the server device 2), so that the subject of interest suitable for the user can be determined. Therefore, a suitable subject of interest is automatically set in accordance with the user. This makes it is possible to provide an appropriate image group viewing environment without causing the user to take time and effort for operation.

In the embodiment, the example has been described where the control unit 2a sets the subject of interest by performing the inference process using the user information regarding the access source using the client terminal 3 (see Fig. 15).

Referring to the attribute information, the history information, the SNS information of the user who has accessed (for example, a user who has logged in to the server device 2), the private photo library of the user, and the like makes it possible to infer the face of the user, the face of a related person (family member, friend, etc.), and the like. Using such an inference result to set a specific face as the subject of interest makes it possible to automatically set the subject of interest suitable for the user and to provide an image in which a person related to the user has been brought into focus.

In the embodiment, the example has been described where the control unit 2a sets the subject of interest candidate using the user information regarding the access source using the client terminal 3 and performs the process of causing the client terminal 3 to present the subject of interest candidate (see Fig. 16).

Referring to the DB in which a person related to the user who has accessed is registered, the attribute information, the history information, the SNS information of the user (for example, a user who has logged in to the server device 2), the private photo library of the user, and the like makes it possible to determine the person related to the user or the face of the person, so that the result of the determination is presented to the user as a recommendation of the subject of interest to cause the user to make a selection. This makes it possible to set a person or the like desired by the user as the subject of interest. The user operation is also simplified in the sense that the selection is made from among candidates. Furthermore, even in a case where accuracy in candidate inference is not so high, an image can be appropriately provided as an image providing service by selecting an appropriate candidate by the user.

In the embodiment, the example has been described where the control unit 2a sets the subject of interest on the basis of the additional information of an image (see Fig. 17).

It is possible to determine, on the basis of a shooting position, a shooting date and time, and the like, an object, a person, event content, or the like that is noteworthy at the location where a corresponding image group is captured. Therefore, a subject that is noteworthy in such a shooting opportunity is set as the subject of interest. For example, a place of interest or a local specialty at a specific tourist spot is set as the subject of interest. Alternatively, a person who is noteworthy in a specific event is set as the subject of interest.

Such a setting makes it possible to provide, to the user, a desirable image as an image group of images of a tourist spot or an event.

In the embodiment, the example has been described where the control unit 2a sets the subject of interest candidate on the basis of the additional information of an image and performs the process of causing the client terminal 3 to present the subject of interest candidate (see Figs. 18 and 19).

On the basis of a shooting position, a shooting date and time, and the like, an object, a person, or event content that is noteworthy at the location where a corresponding image group is captured is determined and presented as the subject of interest candidate to cause the user to make a selection. This makes it possible to set a person, an object, or the like desired by the user as the subject of interest. The user operation is also simplified in the sense that the selection is made from among candidates. Furthermore, even in a case where accuracy in candidate inference is not so high, an image can be appropriately provided as an image providing service by selecting an appropriate candidate by the user.

In the embodiment, the example has been described where the control unit 2a performs the additional process regarding an image or a sound on the image subjected to the focusing process. For example, not only the focusing process but also the image process of, for example, changing the hue or the brightness, the process of, for example, adding a sound, and the like are performed on the image including the subject of interest (see Fig. 5).

This allows an increase in quality of the image to be presented to the user.

In the embodiment, the case has been described where the additional process is performed on the basis of the additional information of an image.

For example, the content of the additional process is determined on the basis of shooting position information, a shooting date and time, and the like.

For example, adjustments to the hue and luminance, and other image adjustments suitable for the shooting position or date and time are performed. It is possible to perform an appropriate image process of, for example, making the color of the sea vivid in an image captured at seaside or changing the hue of an image captured at sunset to make the image appropriate to a sunset atmosphere.

In the embodiment, the example has been described where an image of an image group to be processed is an image obtained by capturing images from a plurality of viewpoints.

Such a multi-viewpoint image makes it possible to change a focus state of a specific subject with higher accuracy.

Furthermore, in the embodiment, the example has been described where an image of an image group is an image to which information regarding a distance of a subject in the depth direction at the time of image capturing is added.

Such an image to which the information regarding a distance in the depth direction is added makes it possible to change the focus state of the specific subject.

Note that, in the embodiment, the processing of the information processing device 70 as the server device 2 has been mainly described, but a specific example of the information processing device of the present disclosure is not limited to the information processing device as a cloud server, for example, and the information processing device (camera control unit 18) in the imaging device 1 may have a function similar to the function of the server device 2 and perform processing similar to the processing of the server device 2.

Needless to say, the other examples of the information processing device include a personal computer device, a tablet information processing device, a mobile phone device, a game console, an audio device, a video device, a communication device, a television device, and various examples. A device capable of performing operations as information processing, for example, a device including a microcomputer can be implemented as the information processing device of the present disclosure.

Furthermore, although the MEC 5 is illustrated in Fig. 1, the MEC 5 may have a function corresponding to the server device 2 of the embodiment.

Furthermore, the MEC 5 may have a part of the function of the imaging device 1 (particularly, the upload transmission function).

The program of the embodiment is a program for causing a CPU, a DSP, a GPU, a GPGPU, an AI processor, or a device including the CPU, the DSP, the GPU, the GPGPU, the AI processor, and the like, to perform the processing of the server device 2 described above.

That is, the program of the embodiment is a program for causing the information processing device to perform: the subject of interest setting process of setting a subject of interest for an image group including a plurality of images; and the focusing process of extracting an image including the subject of interest from the image group and bringing the subject of interest into focus in the extracted image.

Such a program allows the server device 2 described above to be implemented by various computer devices.

Such programs can be recorded in advance on an HDD as a recording medium built in a device such as a computer device, a ROM in a microcomputer having a CPU, or the like.

Alternatively, the programs can be temporarily or permanently stored (recorded) on a removable recording medium such as a flexible disk, a compact disc read only memory (CD-ROM), a magneto optical (MO) disk, a digital versatile disc (DVD), a Blu-ray disc (registered trademark), a magnetic disk, a semiconductor memory, or a memory card. Such a removable recording medium can be provided as so-called package software.

Furthermore, such a program can be installed from a removable recording medium to a personal computer or the like, or can be downloaded from a download site over a network such as a local area network (LAN) or the Internet.

Furthermore, such a program is suitable for a wide range of provision of the server device 2 of the embodiment. For example, downloading the program to a mobile terminal device such as a smartphone or a tablet, a mobile phone, a personal computer, a game console, a video device, a personal digital assistant (PDA), or the like allows the smartphone or the like to function as the server device 2 or the imaging device 1 of the present disclosure.

Note that the effects described herein are merely examples and are not limited, and other effects may be provided.

Note that the present technology can also have the following configurations.
(1) An information processing device including a control unit that performs:
   a subject of interest setting process of setting a subject of interest for an image group including a plurality of images; and
   a focusing process of extracting an image including the subject of interest from the image group and bringing the subject of interest into focus in the image extracted.
(2) In the information processing device according to the above (1), the control unit performs a process of making a plurality of images including the image subjected to the focusing process viewable on an external device.
(3) In the information processing device according to the above (1) or (2), the control unit performs, as the focusing process on an image, a process of bringing the subject of interest into focus and reducing a depth of field.
(4) In the information processing device according to any one of the above (1) to (3), the control unit sets, in the subject of interest setting process, a plurality of subjects as the subjects of interest, and performs, as the focusing process, an image process of bringing each of the plurality of the subjects of interest into focus.
(5) In the information processing device according to any one of the above (1) to (4), the control unit sets, in the subject of interest setting process, a plurality of subjects having distances in a depth direction from an imaging device at the time of image capturing different from each other as the subjects of interest, and performs, as the focusing process, an image process of combining images in which each subject of interest has been brought into focus to create an image in which each of the plurality of the subjects of interest has been brought into focus.
(6) In the information processing device according to any one of the above (1) to (5), the control unit performs, as the focusing process, a process of blurring a subject of non-interest.
(7) In the information processing device according to any one of the above (1) to (6), the control unit sets, in the subject of interest setting process, the subject of interest on the basis of operation information from an external device.
(8) In the information processing device according to the above (7), the control unit causes the external device to present list information regarding a subject of interest, and sets the subject of interest on the basis of an operation on the list information.
(9) In the information processing device according to any one of the above (1) to (8), the control unit sets, in the subject of interest setting process, the subject of interest on the basis of image information transmitted from an external device.
(10) In the information processing device according to any one of the above (1) to (9), the control unit sets, in the subject of interest setting process, the subject of interest on the basis of user information regarding an access source using an external device.
(11) In the information processing device according to any one of the above (1) to (10), the control unit sets, in the subject of interest setting process, the subject of interest by performing an inference process using user information regarding an access source using an external device.
(12) In the information processing device according to any one of the above (1) to (11), the control unit sets, in the subject of interest setting process, a candidate for the subject of interest using user information regarding an access source using an external device, and performs a process of causing the external device to present the candidate.
(13) In the information processing device according to any one of the above (1) to (12), the control unit sets, in the subject of interest setting process, the subject of interest on the basis of additional information of an image.
(14) In the information processing device according to any one of the above (1) to (13), the control unit sets, in the subject of interest setting process, a candidate for the subject of interest on the basis of additional information of an image, and performs a process of causing an external device to present the candidate.
(15) In the information processing device according to any one of the above (1) to (14), the control unit performs an additional process regarding an image or a sound on the image subjected to the focusing process.
(16) In the information processing device according to the above (15), the additional process is performed on the basis of additional information of an image.
(17) In the information processing device according to any one of the above (1) to (16), the image of the image group is an image obtained by capturing images from a plurality of viewpoints.
(18) In the information processing device according to any one of the above (1) to (16), the image of the image group is an image to which information regarding a distance to a subject in a depth direction at the time of image capturing is added.
(19) An information processing method including causing an information processing device to perform:
   a subject of interest setting process of setting a subject of interest for an image group including a plurality of images; and
   a focusing process of extracting an image including the subject of interest from the image group and bringing the subject of interest into focus in the image extracted.
(20) A program for causing an information processing device to perform:
   a subject of interest setting process of setting a subject of interest for an image group including a plurality of images; and
   a focusing process of extracting an image including the subject of interest from the image group and bringing the subject of interest into focus in the image extracted.

### REFERENCE SIGNS LIST

- 1: Imaging device
- 2: Server device
- 2a: Control unit
- 3: Client terminal
- 7: DB
- 8: AI engine
- 9: Mobile terminal
- 10: Storage
- 18: Camera control unit
- 70: Information processing device
- 71: CPU

## Claims

1. An information processing device comprising a control unit that performs:
a subject of interest setting process of setting a subject of interest for an image group including a plurality of images; and
a focusing process of extracting an image including the subject of interest from the image group and bringing the subject of interest into focus in the image extracted.

2. The information processing device according to claim 1, wherein
the control unit performs a process of making a plurality of images including the image subjected to the focusing process viewable on an external device.

3. The information processing device according to claim 1, wherein.
the control unit performs, as the focusing process on an image, a process of bringing the subject of interest into focus and reducing a depth of field.

4. The information processing device according to claim 1, wherein
the control unit sets, in the subject of interest setting process, a plurality of subjects as the subjects of interest, and performs, as the focusing process, an image process of bringing each of the plurality of the subjects of interest into focus.

5. The information processing device according to claim 1, wherein
the control unit sets, in the subject of interest setting process, a plurality of subjects having distances in a depth direction from an imaging device at a time of image capturing different from each other as the subjects of interest, and performs, as the focusing process, an image process of combining images in which each subject of interest has been brought into focus to create an image in which each of the plurality of the subjects of interest has been brought into focus.

6. The information processing device according to claim 1, wherein
the control unit performs, as the focusing process, a process of blurring a subject of non-interest.

7. The information processing device according to claim 1, wherein
the control unit sets, in the subject of interest setting process, the subject of interest on a basis of operation information from an external device.

8. The information processing device according to claim 7, wherein
the control unit causes the external device to present list information regarding a subject of interest, and sets the subject of interest on a basis of an operation on the list information.

9. The information processing device according to claim 1, wherein
the control unit sets, in the subject of interest setting process, the subject of interest on a basis of image information transmitted from an external device.

10. The information processing device according to claim 1, wherein
the control unit sets, in the subject of interest setting process, the subject of interest on a basis of user information regarding an access source using an external device.

11. The information processing device according to claim 1, wherein
the control unit sets, in the subject of interest setting process, the subject of interest by performing an inference process using user information regarding an access source using an external device.

12. The information processing device according to claim 1, wherein
the control unit sets, in the subject of interest setting process, a candidate for the subject of interest using user information regarding an access source using an external device, and performs a process of causing the external device to present the candidate.

13. The information processing device according to claim 1, wherein
the control unit sets, in the subject of interest setting process, the subject of interest on a basis of additional information of an image.

14. The information processing device according to claim 1, wherein
the control unit sets, in the subject of interest setting process, a candidate for the subject of interest on a basis of additional information of an image, and performs a process of causing an external device to present the candidate.

15. The information processing device according to claim 1, wherein
the control unit performs an additional process regarding an image or a sound on the image subjected to the focusing process.

16. The information processing device according to claim 15, wherein
the additional process is performed on a basis of additional information of an image.

17. The information processing device according to claim 1, wherein
the image of the image group is an image obtained by capturing images from a plurality of viewpoints.

18. The information processing device according to claim 1, wherein
the image of the image group is an image to which information regarding a distance to a subject in a depth direction at a time of image capturing is added.

19. An information processing method comprising causing an information processing device to perform:
a subject of interest setting process of setting a subject of interest for an image group including a plurality of images; and
a focusing process of extracting an image including the subject of interest from the image group and bringing the subject of interest into focus in the image extracted.

20. A program for causing an information processing device to perform:
a subject of interest setting process of setting a subject of interest for an image group including a plurality of images; and
a focusing process of extracting an image including the subject of interest from the image group and bringing the subject of interest into focus in the image extracted.
